# EUROPÄISCHE PATENTANMELDUNG

(11) **EP 4 385 317 A1**
(43) Veröffentlichungstag der Anmeldung: **19.06.2024**
(21) Anmeldenummer: 23216432.7
(22) Anmeldetag: 13.12.2023
(51) Int. Cl.: A01G 9/02, A01G 9/24, A01G 27/00, A01G 27/04

(54) **PFLANZMODUL FÜR EINEN HÄNGENDEN GARTEN**

(30) Priorität: 14.12.2022 DE 102022133264
(71) Anmelder: Legat N. Holding GmbH, 91459 Markt Erlbach (DE)
(72) Erfinder: SCHEIDERER, Norbert, 91459 Markt Erlbach (DE)
(74) Vertreter: Patentanwälte Geyer, Fehners & Partner mbB

(57) **Zusammenfassung**

Es wird ein Pflanzmodul für einen hängenden Garten beschrieben. Das Pflanzmodul weist einen Container (4) mit mindestens einem Pflanzbehälter, der zur Aufnahme von Pflanzbodenmaterial ausgebildet und in den Container (4) einsetzbar ist, und einen Versorgungskasten (34) zur Versorgung des Pflanzbehälters (14, 19, 20) mit Gießwasser, welcher tiefer liegt als der Pflanzbehälter (14, 19, 20) und mit diesem fluidverbunden ist, auf. Der Versorgungskasten (34) weist einen Boden (37) und einen Überlauf (46) auf, welcher einen oberhalb des Bodens (37) liegenden Einlass (47), welcher ein maximales Füllniveau im Versorgungskasten (34) vorgibt, und einen Auslass (45) hat. Das Pflanzmodul (2, 54, 56, 58) weist einen Deckel (40) auf, welcher am oberen Ende des Containers (4) angeordnet ist und einen Einlauf (42) für das Gießwasser hat. Eine an den Einlauf (42) angeschlossene Zulaufleitung (44) führt durch den Container (4) und mündet in den Versorgungskasten (34). Der Einlauf (42) am Deckel (40) und der Auslass (45) am Überlauf (46) sind so angeordnet, dass bei übereinander gestapelten Pflanzmodulen (2, 54, 56, 58) aus dem Auslass (45) des oberen Pflanzmoduls (2, 54, 56, 58) auslaufendes Gießwasser direkt in den Einlauf (42) des darunter gelegenen Pflanzmoduls (2, 54, 56, 58) einläuft.

## Beschreibung

Die Erfindung bezieht sich auf ein Pflanzmodul für einen hängenden Garten. Das Pflanzmodul weist einen Container mit mindestens einem Pflanzbehälter, der zur Aufnahme von Pflanzbodenmaterial ausgebildet und in den Container einsetzbar ist, auf. Ferner hat das Pflanzmodul einen Versorgungskasten zur Versorgung des Pflanzbehälters mit Gießwasser. Der Versorgungskasten liegt tiefer als der Pflanzbehälter und ist mit diesem fluidverbunden.

Integrierte Pflanzmodule sind aus der EP 3 172 960 A1 bekannt. In der EP 3 172 960 A1 findet eine sogenannte "Durchbewässerung" statt. Mit Nährstoffen angereichertes Wasser wird von oben in das Pflanzmodul eingebracht und bahnt sich seinen Weg von Pflanzbehälter zu Pflanzbehälter an das untere Ende des Pflanzmoduls. Durch diesen Aufbau werden weiter unten gelegene Pflanzbehälter weniger stark versorgt, als höherliegende. Ebenso besteht die Gefahr der "Überdüngung" von oben gelegenen Pflanzbehältern und der "Unterdüngung" von niedriger gelegenen Pflanzbehältern.

Weitere Pflanzmodule und Anordnungen für hängende Gärten, die auch als vertikale Gärten bezeichnet werden, sind in den Druckschriften DE 20 2018 001 482 U1,
DE 10 2018 123 378 A1, KR 1020140104127 A, DE 10 2019 203 887 A1, WO 2014/147523 A1, WO 2020/243672 A1, EP 3 127 422 B1, DE 20 2020 105 988 U1, WO 2010/142000 A1,
US 7,788,848 B1, WO 2011/136842 A1, DE 1 179 754A1 und der WO 2017/064338 A1 beschrieben.

Derartige Pflanzmodule dienen zur Begrünung von Wänden, insbesondere auch im Innenbereich. Zum Teil werden auch Kräuter etc. für die häusliche Küche in solchen Pflanzmodulen gezogen.

Ein Bewässerungssystem, bei dem ein Wasserspeicher tiefer liegt als ein Pflanzbehälter und beide miteinander über Dochte etc. fluidverbunden sind, ist beispielsweise von der Firma LECHUZA bekannt: https://www.lechuza.de/bewaesserungssystem/sp_selfwatering.html. Ebenso sind Hydroponik Systeme zur Bewässerung bekannt: https://www.hydroponik-urban-gardening.de/hydroponik-leitfaden/hydroponik-leitfaden/?L=0. Hierbei ist zwar eine individuelle Versorgung einzelner Pflanzbehälter möglich, jedoch ist eine Stapelung mehrerer Pflanzmodule nicht möglich.

Der Erfindung liegt deshalb die Aufgabe zugrunde, ein Pflanzmodul so weiterzubilden, dass integrierte Pflanzmodule möglich werden, die unproblematisch übereinander gestapelt werden können und gleichzeitig eine verbesserte Bewässerung und Düngung der einzelnen Pflanzbehälter ermöglichen.

Die Erfindung ist im Anspruch 1 definiert. Die abhängigen Ansprüche definieren bevorzugt Weiterbildungen.

Das Pflanzmodul für einen hängenden Garten weist einen Container mit mindestens einem Pflanzbehälter, der zur Aufnahme von Pflanzbodenmaterial ausgebildet und in den Container einsetzbar ist, auf. Ferner hat das Pflanzmodul einen Versorgungskasten zur Versorgung des Pflanzbehälters mit Gießwasser, welcher am oder im Container angeordnet ist, tiefer liegt als der Pflanzbehälter, und mit diesem fluidverbunden ist.

Unter "Gießwasser" wird eine Flüssigkeit zur Versorgung von Pflanzen verstanden, insbesondere Wasser oder Wasser mit zugesetzten Nährstoffen. "Fluidverbunden" bedeutet, dass das sich im Versorgungskasten befindliche Gießwasser über eine wie auch immer geartete Verbindung in den höher gelegenen Pflanzbehälter gelangen kann, z.B. durch einen Docht oder eine andere Struktur, welche eine Kapillarwirkung nutzt. Auch ein Pumpsystem ist als Fluidverbindung möglich.

Der Versorgungskasten weist einen Boden und einen Überlauf auf, der einen oberhalb des Bodens liegenden Einlass, welcher ein maximales Füllniveau im Versorgungskasten vorgibt, und einen Auslass hat. Das Pflanzmodul weist einen Deckel auf, welcher am oberen Ende des Containers angeordnet ist und einen Einlauf für das Gießwasser hat. Eine an den Einlauf angeschlossene Zulaufleitung führt durch den Container und mündet im Versorgungskasten. Außerdem sind der Einlauf und der Auslass zueinander so angeordnet, dass bei übereinander gestapelten Pflanzmodulen aus dem Auslass des oberen Pflanzmoduls auslaufendes Gießwasser in den Einlauf des darunter gelegenen Pflanzmoduls einläuft.

Der Versorgungskasten wird über den Einlauf und die daran angeschlossene Zulaufleitung mit Gießwasser versorgt. So kann das Gießwasser über die Zulaufleitung von außerhalb des Containers in den Versorgungskasten eingebracht werden, ohne dass beispielsweise der Deckel entfernt oder der Versorgungskasten aus dem Container gelöst werden muss.

Besonders bevorzugt ist die Zulaufleitung ein Schlauch oder Rohr.

Das Gießwasser wird über den Einlauf in das Pflanzmodul eingebracht, wobei es in die Zulaufleitung einläuft und durch die Zulaufleitung hindurch in den Versorgungskasten gelangt, wobei es noch nicht zu den Pflanzen gelangen kann. Die Zulaufleitung ist an den Einlauf des Pflanzmoduls angeschlossen, beispielsweise ist die Zulaufleitung über einen in den Container hinein ragenden Vorsprung am Einlauf gestülpt oder mit diesem Vorsprung verschraubt. Das Gießwasser kommt beim Befüllen des Versorgungskastens zu keiner Zeit in direkten Kontakt mit dem Pflanzbehälter, sondern läuft durch die Zulaufleitung am Pflanzbehälter vorbei in den Versorgungskasten.

Das maximale Füllniveau im Versorgungskasten liegt bevorzugt tiefer als der Pflanzbehälter. Dadurch wird verhindert, dass der Pflanzbehälter in das Gießwasser im Versorgungskasten eintaucht.

Im Versorgungskasten ist der Überlauf vorgesehen, durch dessen Einlass das maximale Füllniveau des Versorgungskastens festgelegt ist. Bis zu diesem maximalen Füllniveau kann der Versorgungskasten mit Gießwasser gefüllt werden. Es wird durch die Abmessungen des Überlaufs bzw. die Höhenlage des Einlasses im Versorgungskasten definiert. In den Ausführungsformen der Erfindung befindet sich der Überlauf stets am Boden des Versorgungskastens und erstreckt sich mit seinem Einlass in das Innere des Versorgungskastens hinein. Gleichermaßen ist es aber auch möglich, dass der Einlass des Überlaufs an der Seite des Versorgungskastens angeordnet ist, ähnlich wie es beispielsweise in einem handelsüblichen Waschbecken der Fall ist.

Der Versorgungskasten kann nach oben hin eine Öffnung aufweisen, über die die Fluidverbindung zum Pflanzbehälter hergestellt ist. Gleichermaßen kann der Versorgungskasten oben geschlossen sein und eine Fluidverbindung beispielsweise an der Seite vorgesehen sein. Ist im Versorgungskasten eine Öffnung vorgesehen, liegt das maximale Füllniveau immer tiefer als die Öffnung an der Oberseite des Versorgungskastens. Überschreitet das Gießwasser im Versorgungskasten das durch den Einlass des Überlaufs vorbestimmte maximale Füllniveau, läuft es über den Auslass des Überlaufs aus dem Versorgungskasten aus.

Die Fluidverbindung zwischen Versorgungskasten und Pflanzbehälter endet unterhalb des maximalen Füllniveaus, sodass das Gießwasser im befüllten Zustand über die Fluidverbindung aus dem Versorgungskasten in den Pflanzbehälter gelangen kann. Bevorzugt endet die Fluidverbindung am Boden bzw. direkt über dem Boden des Versorgungskastens, sodass das Gießwasser im Versorgungskasten vollständig zur Versorgung des Pflanzbehälters genutzt und der Versorgungskasten möglichst vollständig geleert werden kann.

Das über den Auslass aus dem Versorgungskasten auslaufende Gießwasser, kann entweder in ein weiter unten gelegenes weiteres Pflanzmodul einlaufen (dies wird im Weiteren noch genauer beschrieben), oder für den Fall, dass nur ein Pflanzmodul vorgesehen ist, läuft das Gießwasser über den Auslass aus dem Pflanzmodul aus, so dass der Benutzer erkennt, dass der Versorgungskasten vollständig mit Wasser gefüllt ist.

Bevorzugt weist der Versorgungskasten einen Füllstandsanzeiger auf, welcher das Füllniveau im Versorgungskasten anzeigt. Zusätzlich oder alternativ kann der Versorgungskasten unterhalb des Auslasses einen Auffangbehälter aufweisen. Beide Varianten sorgen dafür, dass der Benutzer erkennt, zu welchem Grad bzw. ob der Versorgungskasten gefüllt ist.

Der am oberen Ende des Containers befestigte Deckel weist einen Einlauf für das Gießwasser auf, mit dem die Zulaufleitung verbunden ist, so dass das Gießwasser über den Einlauf in den Versorgungskasten eingebracht werden kann. Dadurch ist das Pflanzmodul an der Oberseite verschlossen und vor äußeren Einflüssen wie z. B. Regen geschützt; gleichzeitig ist aber eine Befüllung des Versorgungskastens über den Einlauf und die Zulaufleitung stets gewährleistet.

Der Deckel ist lösbar mit dem Container verbunden.

Mehrere Pflanzmodule können zu einer Pflanzwand kombiniert werden. Insbesondere werden mehrere identische Pflanzmodule übereinander angeordnet. Besonders bevorzugt sind mehrere Container übereinander stapelbar, wobei jeder Container an seiner Oberseite und seiner Unterseite korrespondierende Ausrichtstrukturen aufweist, wie z.B. Stege, Führungen, Stufen/Vorsprünge, einen Zentrierring, etc. die beim Stapeln von Containern deren Ausrichtung so sicherstellen, dass der Auslass des oberen Containers über dem Einlauf des unteren Containers liegt und so die Versorgungskästen in Art einer Kaskade befüllbar sind.

Besonders bevorzugt kann die Ausrichtstruktur am Auslass vorgesehen und derart ausgebildet sein, dass sie bei übereinander gestapelten Pflanzmodulen in den als Vertiefung gestalteten Einlauf eingreift. Möglich wäre beispielsweise ein z.B. ringförmiger Steg, welcher an der Unterseite des Containers nach unten vorsteht und im zusammengebauten Zustand an einer Innenwand des Einlaufs anliegt. Die Ausrichtstruktur kann einen Teil des Auslasses umfassen, der über die Unterseite hinausragt.

Weiter bevorzugt kann die erste Ausrichtstruktur als Zentrierstruktur im Einlauf vorgesehen und so ausgebildet sein, dass sie bei übereinander gestapelten Pflanzmodulen in eine als Ausnehmung ausgebildete zweite Ausrichtstruktur an der Unterseite des Containers eingreift.

Optional kann ein zusätzliches Ausrichtungsstück vorgesehen werden, das in den Einlauf eingefügt wird.

Von besonderer Bedeutung ist es, dass der Einlauf und der Auslass so zueinander angeordnet sind, dass bei übereinander gestapelten Pflanzmodulen das aus dem Auslass des oberen Pflanzmoduls auslaufende Gießwasser in den Einlauf des darunter gelegenen Pflanzmoduls einläuft. Die Bewässerung erfolgt dann über eine sogenannte kaskadenförmige Überlaufniveausteuerung. Das Gießwasser wird in den Einlauf des obersten Pflanzmoduls eingeführt und gelangt von da aus über die an den Einlauf angeschlossene Zulaufleitung in den Versorgungskasten eben dieses obersten Pflanzmoduls. Ist das maximale Füllniveau, welches durch den Einlass am Überlauf eingestellt ist, erreicht, fließt das Gießwasser über den Auslass des Überlaufs aus dem obersten Pflanzmodul heraus und in den Einlass des nächst tieferliegenden Pflanzmoduls ein. An diesen Einlass schließt dann eine weitere Zulaufleitung an, welche durch die Öffnung an der Oberseite des Versorgungskastens des zweiten Pflanzmoduls in eben diesem Versorgungskasten mündet. Ist das durch den Einlass des Überlaufs vorbestimmte maximale Füllniveau des zweiten Versorgungskastens erreicht und das Gießwasser läuft durch den Auslass des zweiten Überlaufs ab, kann in analoger Weise ebenfalls ein drittes, viertes, oder weiteres Pflanzmodul mit Gießwasser versorgt werden. Ist das Gießwasser im Versorgungskasten des untersten Pflanzmoduls angelangt und das entsprechende durch den Einlass des Überlaufs eingestellte maximale Füllniveau des untersten Versorgungskastens erreicht, läuft das Gießwasser aus der Pflanzwand aus, so dass der Benutzer erkennt, dass alle Versorgungskästen bis zum jeweils eingestellten maximalen Füllniveau vollständig mit Gießwasser gefüllt sind. Er kann dann die Wasserzufuhr am Einlauf des obersten Pflanzmoduls stoppen.

Besonders bevorzugt wird diese Anordnung durch die oben beschriebenen Ausrichtstrukturen sichergestellt.

Bevorzugt sind die Querschnitte der Öffnungen von Auslass und Einlauf sowie der Zulaufleitung so aufeinander abgestimmt, dass es keinen Rückstau in einer Zulaufleitung bis in einen Einlauf geben kann. Dann sind keine zusätzlichen Dichtungsmaßnahmen an den Verbindungsstellen erforderlich.

Bevorzugt ist dazu der Querschnitt des Auslasses, durch den das Gießwasser aus dem Versorgungskasten abläuft, kleiner, als der Querschnitt des Einlaufs und der Zulaufleitung. Dadurch wird sichergestellt, dass das gesamte Gießwasser aus dem Auslass eines höherliegenden Pflanzmoduls vom Einlauf des tieferliegenden Pflanzmoduls aufgenommen werden kann, ohne dass sich das Gießwasser rückstaut.

Besonders bevorzugt ist an einer derartigen Pflanzwand am Versorgungskasten des untersten Pflanzmoduls der Füllstandsanzeiger und/oder der Auffangbehälter oder ein Verschlussstopfen für den Auslass vorgesehen. So kann der Benutzer stets ablesen, zu welchem Grad bzw. ob der unterste Versorgungskasten gefüllt ist. Die höher liegenden Versorgungskästen sind dann automatisch gefüllt. Durch den Auffangbehälter bzw. den Verschlusstopfen ist es verhindert, dass das das Gießwasser aus dem untersten Pflanzmodul ausläuft, was zu unerwünschten Verunreinigungen führen würde.

Als Fluidverbindung zwischen Versorgungskasten und Pflanzbehälter ist bevorzugt eine Struktur vorgesehen, welche eine Kapillarwirkung nutzt. Besonders bevorzugt ist diese Verbindung ein gießwasserleitender Docht. Die Bewässerung des Pflanzbodenmaterials in den Pflanzbehältern über Struktur, welche eine Kapillarwirkung nutzt, ist ein einfaches, passives Hydroponik-System. Es funktioniert gänzlich ohne Strom, Pumpen oder andere technische Hilfsmittel und ist damit sehr einfach und kostengünstig zu realisieren. Die Struktur, welche eine Kapillarwirkung nutzt, also z.B. der Docht, taucht in das sich im Versorgungskasten befindliche Gießwasser, welches gegebenenfalls mit Nährstoffen versetzt ist, ein und saugt dieses über Kapillarkräfte nach oben in die Pflanzbehälter und damit in das Pflanzbodenmaterial hinein. So wird eine ausgewogene Versorgung der Pflanze sichergestellt. Außerdem wird der sich im Pflanzbodenmaterial befindliche Pflanzenspross vor Staunässe geschützt, denn der Pflanzenspross muss nicht zusätzlich von außen bewässert werden.

Wird ein Docht verwendet, ist es durch eine entsprechende Wahl des Materials bzw. des Querschnitts des Dochtes pflanzenindividuell möglich, die Pflanzbehälter unterschiedlich stark mit Gießwasser und damit auch mit Nährstoffen zu versorgen. Es können in einem Pflanzmodul mehrere Pflanzbehälter vorgesehen sein, und man kann dann jeden Pflanzbehälter individuell und unterschiedlich mit Gießwasser und Nährstoffen versorgen. Trocken wachsende Pflanzen können damit im Pflanzmodul kombiniert werden mit Pflanzen, die einen sehr feuchten Boden benötigen. Als Material für den Docht eignet sich besonders ein Glasfaserdocht, er kann im Prinzip aber auch aus jedem anderen saugfähigen Material bestehen.

Es kann natürlich auch eine andere Fluidverbindung als eine Struktur, die eine Kapillarwirkung nutzt vorliegen, wie z.B. ein Rohr oder ein Schlauch, kombiniert mit einem Pumpsystem.

Im Pflanzbehälter kann z.B. ein Loch vorgesehen sein, durch das die Fluidverbindung aus dem Inneren des Pflanzbehälters austritt, sodass eine Verbindung zwischen Pflanzbodenmaterial und Gießwasser im Versorgungskasten hergestellt wird.

Der Pflanzbehälter selbst ist wasserundurchlässig. Er ist aus einem wasserundurchlässigen Material gebildet und besteht besonders bevorzugt aus Kunststoff, z.B. hergestellt aus Spritzguss.

Weiter bevorzugt ist der Überlauf als Tauchrohr ausgebildet. Dadurch kann der Überlauf besonders dünnwandig ausgebildet werden und die Dichtigkeit am Überlauf ist verbessert. Weiter bevorzugt ist der Einlass des Überlaufs höhenverstellbar. Dann kann das maximale Füllniveau, zu welchem der Versorgungskasten mit Gießwasser gefüllt werden soll, manuell und individuell angepasst werden. Es können auch im Falle einer Pflanzwand mit mehreren Pflanzmodulen in den jeweiligen Versorgungskästen unterschiedliche maximale Füllniveaus eingestellt werden.

Besonders bevorzugt ist eine Ausgestaltung des Pflanzmoduls, bei der an der Vorderseite des Containers mehrere Öffnungen für insgesamt mehrere Pflanzsprosse vorgesehen sind und für jede Öffnung ein entsprechender Pflanzbehälter vorgesehen ist. Die Pflanzbehälter sind in den Container einsetzbar. Besonders bevorzugt wird die Fluidverbindung zwischen Versorgungskasten und Pflanzbehälter beim Einsetzen des Pflanzbehälters in den Container hergestellt. Dadurch ist nach Herausnehmen aus dem Container und Bepflanzen eines einzelnen Pflanzbehälters, nach erneutem Einsetzen des bepflanzten Pflanzbehälters sofort die Fluidverbindung zwischen Versorgungskasten und Pflanzbehälter sichergestellt.

Besonders bevorzugt ist im Pflanzmodul für die Pflanzbehälter ein Schubladensystem vorgesehen, bei dem jeder Pflanzbehälter als Schublade ausgestaltet ist und über ein Schienensystem über Öffnungen an der Vorderseite des Containers austauschbar im Container befestigt wird. Das Bepflanzen, Versorgen und Ernten kann dann unproblematisch außerhalb des Containers vorgenommen werden, da dazu lediglich die Schublade aus der Öffnung an der Vorderseite des Containers herausgezogen wird. Das Konzept der Schubladen ermöglicht es weiter, für unterschiedliche Pflanzen auch individuell angepasstes Pflanzbodenmaterial zu verwenden. Auch ist ein ungewünschtes Durchwuchern des Pflanzmoduls vermieden, da das Wurzelwachstum der Pflanzen auf den jeweiligen Pflanzbehältern, d. h. die jeweilige Schublade beschränkt ist.

Jede Schublade steht über ihre jeweilige Fluidverbindung bzw. ihren jeweiligen Docht in direktem Kontakt mit dem Gießwasser im Versorgungskasten, über den das sich in der Schublade befindliche Pflanzbodenmaterial mit Gießwasser versorgt wird. Auch hier ist es wie bereits beschrieben pflanzenindividuell möglich, die Schubladen unterschiedlich stark mit Gießwasser, also mit Nährstoffen und Wasser zu versorgen.

Die Schublade wird durch Öffnungen in den Container hineingeschoben. Es ist bevorzugt hierzu eine Frontplatte an der Vorderseite des Containers vorzusehen und daran eine Führung, beispielsweise eine Führungsschiene, vorzusehen, die sich von der Frontplatte in den Container hinein erstreckt. Alternativ oder zusätzlich kann die Führung auch dadurch realisiert werden, dass der Container eine der Frontplatte gegenüberliegende Rückwand aufweist und die Schublade sich im eingeschobenen Zustand an der Rückwand abstützt. Dies ist zweckmäßiger Weise damit zu kombinieren, dass die Schublade im eingeschobenen Zustand an der Frontplatte einhängbar ist. Dann kann sich die Schublade im eingeschobenen Zustand an der Rückwand sowie aufgrund der Einhängung an der Frontplatte abstützen, so dass separate Führungsschienen nicht zwingend erforderlich sind.

Das Konzept der Schubladen hat weiter den Vorteil, dass eine besonders gute Feuchtigkeitsverteilung im Pflanzbehälter realisiert werden kann. Insbesondere ist es einfach möglich, den Schubladenboden so zu gestalten, dass der Schubladenboden im eingeschobenen Zustand im Wesentlichen horizontal liegt - natürlich darauf bezogen, dass der Container entsprechend aufrecht angeordnet ist, beispielsweise an einer Wand hängt. Optional verläuft auch der Einschiebevorgang horizontal.

Auch kann das Pflanzmodul seinerseits modular aufgebaut sein. Insbesondere ist es möglich, eine Frontplatte lösbar an der Vorderseite des Containers zu befestigen. Auf diese Weise können unterschiedliche Frontplatten, beispielsweise mit Öffnungen unterschiedlicher Form und Größe, verwendet werden. Dies ermöglicht es, Pflanzen im Pflanzcontainer zu kombinieren, die unterschiedlich große Öffnungen für den Pflanzenspross bzw. ein unterschiedliches Volumen im Pflanzbehälter verlangen.

Soweit in dieser Beschreibung Angaben wie "oben" oder "unten" verwendet werden, sind diese auf die Orientierung in den Zeichnungen bzw. die vorgesehene Montage des Pflanzmoduls an einer Wand bezogen.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbeispiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Von den Figuren zeigen:
- Fig. 1: eine perspektivische Schnittdarstellung eines Pflanzmoduls,
- Fig. 2: eine Schnittdarstellung des Pflanzmoduls der Fig. 1,
- Fig. 3: eine perspektivische Schnittdarstellung von zwei übereinander angeordneten Pflanzmodulen,
- Fig. 4: eine perspektivische Schnittdarstellung von vier übereinander angeordneten Pflanzmodulen,
- Fig. 5: eine Frontplatte des Pflanzmoduls mit eingesetzten Schubladen in einer Ansicht von vorne (links) bzw. von der Rückseite her (rechts), und
- Fig. 6: vier Ansichten einer Schublade des Pflanzmoduls.

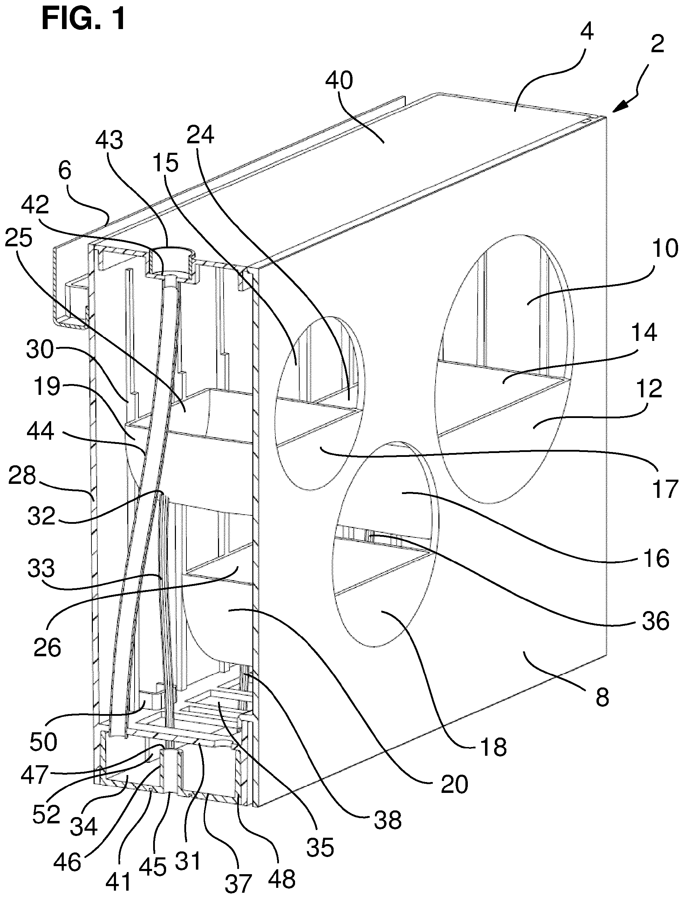

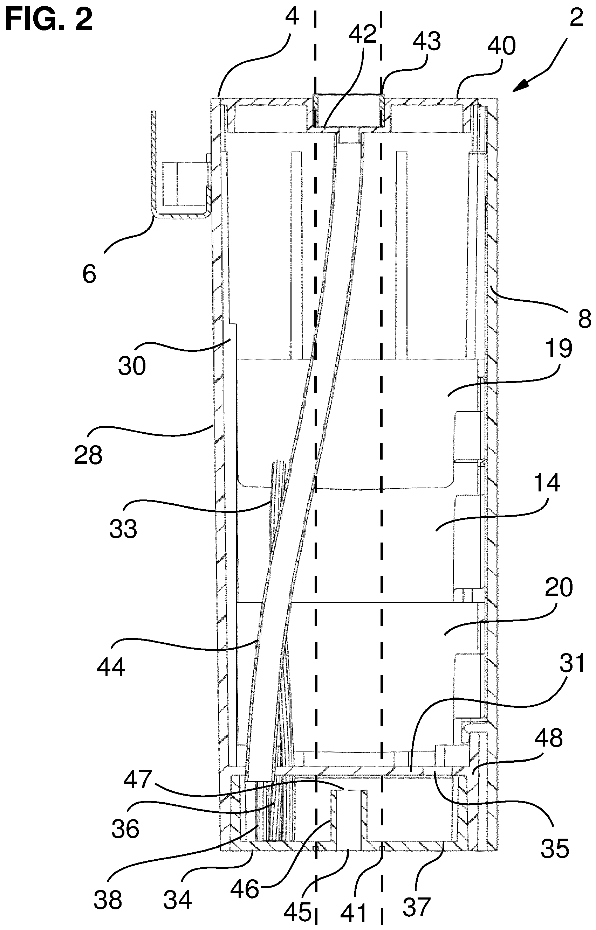

Fig. 1 zeigt in perspektivischer Teilschnittdarstellung ein Pflanzmodul 2 für einen hängenden Garten. Dieses Pflanzmodul 2 ist in Fig. 2 in Schnittansicht zu sehen. In den Zeichnungen sind die Bezugszeichen für einander entsprechende Elemente des Pflanzmoduls 2 einheitlich verwendet.

Das Pflanzmodul 2 umfasst einen Container 4, der an seiner Rückseite über eine Schiene 6 an einer Wand aufgehängt werden kann. Im aufgehängten Zustand befindet er sich dann in der Lage, die in Fig. 1 und 2 dargestellt ist. An der Vorderseite weist der Container 4 eine Frontplatte 8 auf, die bevorzugt lösbar befestigt ist. Die Frontplatte 8 hat eine Öffnung 10, deren unterer Teil durch eine Front 12 einer Schublade 14, welche in die Öffnung 10 eingeschoben ist und die als Pflanzbehälter dient. In diese Schublade 14 wird Pflanzbodenmaterial, beispielsweise Erde oder ein feuchtigkeitsspeicherndes Pflanzsubstrat eingebracht und in dieses Pflanzbodenmaterial wird eine Pflanze gesetzt. Der obere Teil der Öffnung 10 wird von der Front 12 freigelassen, so dass ein Pflanzenspross hindurchgeführt werden kann und am Pflanzmodul 2 nach außen wächst.

Bei eingeschobenem Pflanzbehälter verbleibt für den Pflanzenspross eine Pflanzenöffnung, die durch den nicht von der Front 12 abgedeckten Teil der Öffnung 10 gebildet ist. Die Front 12 sichert das Pflanzbodenmaterial im Pflanzbehälter gegen Herausfallen.

Die Schublade 14 hat in ihrem Querschnitt, also senkrecht zur Front 12, ein Korpusmaß, das dem der Öffnung 10 entspricht, so dass sie durch die Öffnung 10 in das Innere des Containers 4 eingeschoben werden kann. Die Front 12 lässt den oberen Teil der Öffnung 10 für den Pflanzenspross frei. Im eingeschobenen Zustand ist die Schublade 14 durch geeignete Mittel im Container 4 fixiert. In der Darstellungsform der Fig. 1 erfolgt dies dadurch, dass die Schublade 14 im Bereich ihrer Front 12 an den unteren Rand der Öffnung 10 eingehängt wird.

Der Container 4 hat zusätzlich zur Öffnung 10 noch zwei weitere Öffnungen 15 und 16, in die ebenfalls Schubladen 19, 20 mit Front 17, 18 eingehängt werden. Diese weiteren Schubladen 19, 20 sind ebenfalls in ihrem Korpusmaß an die Größe der Öffnungen 15, 16 angepasst. Sie entsprechen in ihrem Aufbau der Schublade 14. Die Größen der Öffnungen 10, 15, 16 und damit der Schubladen 14, 19, 20 können variieren, wie es in Fig. 1 dargestellt ist, müssen es aber nicht.

Alle drei Schubladen 14, 19, 20 haben eine Rückwand 24, 25, 26, die im eingeschobenen Zustand, wenn die Schubladen 14, 19, 20 am unteren Rand der Öffnung 10, 15, 16 eingehängt sind, an einer Rückwand 28 des Containers 4 anliegend. Auf diese Weise wird die Schublade 14, 19, 20 in der Stellung, in der sie von der Frontplatte 8 zur Rückwand 28 hin auskragt, im Container 4 stabilisiert, da die Rückseite 24, 25, 26 der Schublade 14, 19, 20 sich an der Rückwand 28 abstützt. Bevorzugt weist die Rückwand 28 dazu mindestens einen Steg 30 auf, an den die entsprechende Rückseite 24, 25, 26 zur Anlage kommt. Durch den Steg 30 ist eine flächige Anlage an der Rückwand 28 vermieden, was aus Gründen der Luftzirkulation vorteilhaft ist. Die Stege sind keilförmig, d. h. an einem Ende (hier unten) weniger dick als am anderen Ende (hier oben). Dies erleichtert die Herstellung der Spritzguss, da das Entformen einfacher ist.

Die Länge der Schublade 14, 19, 20 von der Front 12, 17, 18 zur Rückseite 24, 25, 26 entspricht dem Maß zwischen der Frontplatte 8 und Rückwand 28 bzw. dem Steg 30.

Für die Schublade 19 ist ein Loch 32 zu erkennen, durch welches Gießwasser über einen Docht 33 in das Innere der Schublade 19, und damit des entsprechenden Pflanzbehälters eingebracht wird. Gleiches gilt auch für die Schubladen 14 und 20. Auch diese weisen je ein Loch (in Fig. 1 und 2 nicht erkennbar) auf, durch welches das Innere der jeweiligen Schublade 14, 20 über weitere Dochte 36, 38 mit Gießwasser versorgt wird. Jeder Docht 33, 36, 38 mündet im unteren Abschnitt des Containers in einen Versorgungskasten 34. Der Versorgungskasten 34 ist mit Gießwasser gefüllt. In dieses Gießwasser taucht der Docht 33, 36, 38 ein und saugt das Wasser über Kapillarkräfte in das Innere der Schublade 14, 19, 20. Um eine Verbindung des Dochtes 33, 36, 38 zwischen Pflanzbehälter und Versorgungskasten 34 sicherzustellen, weist der Container 4 eine Lochplatte 31 auf, in der Aussparungen 35 vorgesehen sind. Diese Platte liegt am oben offenen Versorgungskasten 34 auf. Durch die Aussparungen 35 kann jeder Docht 33, 36, 38 im eingebauten Zustand in den Versorgungskasten 34 eintauchen und so eine Verbindung zum darin enthaltenen Gießwasser zum Pflanzbehälter herstellen. Es ist natürlich ebenfalls möglich, dass als Fluidverbindung anstatt des Dochtes 33, 36, 38 eine andere Struktur vorgesehen ist, welche Kapillarkräfte nutzt. Auch eine Pumpverbindung oder Ähnliches wäre möglich. Der Docht 33, 36, 38 endet direkt an einem Boden 37 des Versorgungskastens 34, so dass sichergestellt wird, dass das Gießwasser im Versorgungskasten 34 vollständig genutzt und der Versorgungskasten 34 vollständig geleert werden kann.

Der Container 4 weist an seiner Oberseite einen Deckel 40 auf. Am Deckel 40 ist ein Einlauf 42 vorgesehen, an den eine Zulaufleitung 44 angeschlossen ist, welche (z.B. über die Aussparungen 35) in den Versorgungskasten 34 mündet. Über den am Deckel 40 vorgesehenen Einlauf 42 und die daran angeschlossene Zulaufleitung 44 kann Gießwasser in den Versorgungskasten 34 eingefüllt werden. Durch einen Einlass 47 an einem Überlauf 46 ist ein maximales Füllniveau des Gießwasserspiegels im Versorgungskasten 34 eingestellt. Erreicht das Gießwasser im Versorgungskasten 34 dieses maximale Füllniveau, läuft das Gießwasser über einen Auslass 45 am Überlauf 46 aus dem Container 4 aus, so dass der Versorgungskasten 34 nicht mit Gießwasser überfüllt werden kann.

An der Unterseite des Containers 4 ist um den Auslass 45 eine Ausnehmung 41, die hier exemplarisch ringförmig ist, vorgesehen. An der Oberseite ist in den Einlauf 41 ist eine Zentrierstruktur z.B. ein Zentrierring 43 eingesetzt. Die ringförmige Ausnehmung 41 und der Zentrierring 43, der separat - wie dargestellt - oder integral ausgebildet sein kann, dienen als Ausrichtstrukturen. Werden mehrere Pflanzmodule 2 übereinander gestapelt, greift der Zentrierring 43 in die Ausnehmung 41 ein und richtet dadurch den Einlauf 42 derart zum Auslass 45 aus, dass die oben beschriebene Befüllung des Versorgungskastens 34 sichergestellt werden kann.

Natürlich kann die Anordnung von Steg und Ausnehmung an Ober- und Unterseite auch invertiert sein. Z.B. kann ein Steg am Auslass 45 vorgesehen sein, welcher an der Unterseite an Container 4 vorragt und bei übereinander gestapelten Pflanzmodulen 2 in den Einlauf 42 eingreift, z.B. so dass seine Außenseite an einer Innenseite des Einlaufs 42 anliegt.

In den Ausführungsformen ist der Überlauf 46 als Tauchrohr ausgebildet, andersartige Gestaltungen sind aber natürlich gleichermaßen möglich. Der Überlauf 46 kann beispielsweise über ein Gewinde oder Ähnliches höhenverstellbar ausgebildet sein. Auch muss er nicht am Boden 37 des Versorgungskastens 34 vorgesehen sein, er kann sich auch an einer Seite des Versorgungskastens 34 befinden und dort mit seinem Einlass 47 ein maximales Füllniveau definieren.

Die Schubladen 14, 19, 20 können durch die Öffnungen 10, 15, 16 bequem aus dem Container 4 entnommen werden, um Pflanzen einzusetzen, zu bearbeiten, entnehmen, ernten oder anderweitig zu behandeln.

Die Schubladen 14, 19, 20 weisen an ihrer Vorderseite zur Front 12, 17, 18 hin eine Stufe 27 auf, sowie zwischen der Stufe 27 und der Front 12, 17, 18 Raststege 29, die in entsprechende Rastnuten, die am unteren Rand der Öffnung 10, 15, 16 ausgebildet sind, eingreifen, um die Schublade 14, 19, 20 am Rand der Öffnung 10, 15, 16 gesichert zu halten, während sie sich zugleich an der Rückwand 28 abstützt.

Fig. 1 und 2 zeigen Ausführungsformen, bei denen die Schubladen 14, 19, 20 an der Frontplatte 8 eingehängt werden und sich an der Rückwand 28 abstützen. Dies ist nicht die einzige Möglichkeit. Beispielsweise ist es gleichermaßen möglich, die Schublanden 14, 19, 20 auf mindestens einer Führungsschiene zu führen, die an der Frontplatte 8 angebracht ist, optional zusätzlich auch an der Rückwand 28. Dieser Ansatz hat den Vorteil, dass Schubladen unterschiedlicher Tiefe eingesetzt werden können, da die Schubladen 14, 19, 20 sich nicht zwingend an der Rückwand 28 abstützen müssen.

Natürlich kann die innen verfügbare Tiefe jeder Schublade 14, 19, 20 auch beim Konzept gemäß Fig. 1 und 2 variiert werden, indem an der Rückwand 28 und/oder der Rückseite 24, 25, 26 jeder Schublade 14, 19, 20 ein entsprechender Abstandshalter vorgesehen ist, über den sich die Schublade 14, 19, 20 an der Rückwand 28 abstützt, auch wenn sie nicht die Länge von ihrer Front 12, 17, 18 zu ihrer Rückseite 24, 25, 26 hat, die nötig wäre, damit sich die Schublade 14, 19, 20 direkt mit ihrer Rückseite 24, 25, 26 an der Rückwand 28 abstützt.

Die Öffnungen 10, 15, 16 des Pflanzmoduls 2 können über unterschiedliche Größen verfügen. In der Ausführungsform der Fig. 1 sind die Öffnungen 10, 15, 16 rein exemplarisch kreisförmig und haben unterschiedliche Durchmesser. Die Schubladen 14, 19, 20 sind mit ihrem Korpus auf die Größe der Öffnungen 10, 15, 16 angepasst, so dass sie in die Öffnungen eingeschoben werden können und dann jeweils mit ihrer Front 12, 17, 18 den unteren Teil der Öffnung 10, 15, 16 verschließen, so dass das Pflanzbodenmaterial in der Schublade 14, 19, 20 bereitgestellt ist. Fig. 1 und 2 zeigen diesen eingeschobenen Zustand. Es ist möglich, dass die Fluidverbindung beim Einsetzen der Schublade 14, 19, 20 automatisch hergestellt wird. Dann wird die Schublade 14, 19, 20 in das Schienensystem eingesetzt und/oder die Fluidverbindungen (z.B. Dochte 33, 36, 38) tauchen automatisch in das Gießwasser im Versorgungskasten 34 ein.

Das Pflanzmodul 2 ist modular aufgebaut. Der Container 4 ist hier als Rahmengehäuse 48 ausgeführt, an dessen Oberseite ein Deckel 40 vorgesehen ist. In diesem Deckel 40 ist der Einlauf 42 vorgesehen. An der Unterseite wird in das Rahmengehäuse 48 der Versorgungskasten 34 eingesetzt, an der Rückwand die Schiene 6 angebracht.

Das Rahmengehäuse 48 ist so ausgestaltet, dass der Versorgungskasten 34 so eingefügt werden kann, dass er im eingesetzten Zustand nicht erkennbar ist. Dazu sind für den Versorgungskasten 34 an der Unterseite entsprechende Aufnahmen 50 für Klipse 52 vorgesehen, die am Versorgungskasten 34 nach oben ragen. Auf diese Weise kann der Versorgungskasten 34 von unten in das Rahmengehäuse 48 eingeschoben und dort eingeklippst werden.

Die Außenwände des Rahmengehäuses 48 sind dabei bevorzugt so gestaltet, dass der von unten eingeklippste Versorgungskasten 34 nicht sichtbar ist, d. h. insbesondere nicht nach unten oder oben über das Rahmengehäuse 48 hinausragt. Dies hat nicht nur ästhetische Gründe, sondern ist auch unter Reinigungsgesichtspunkten vorteilhaft, da an den Außenwänden des Rahmengehäuses 48 keine Spalten bestehen.

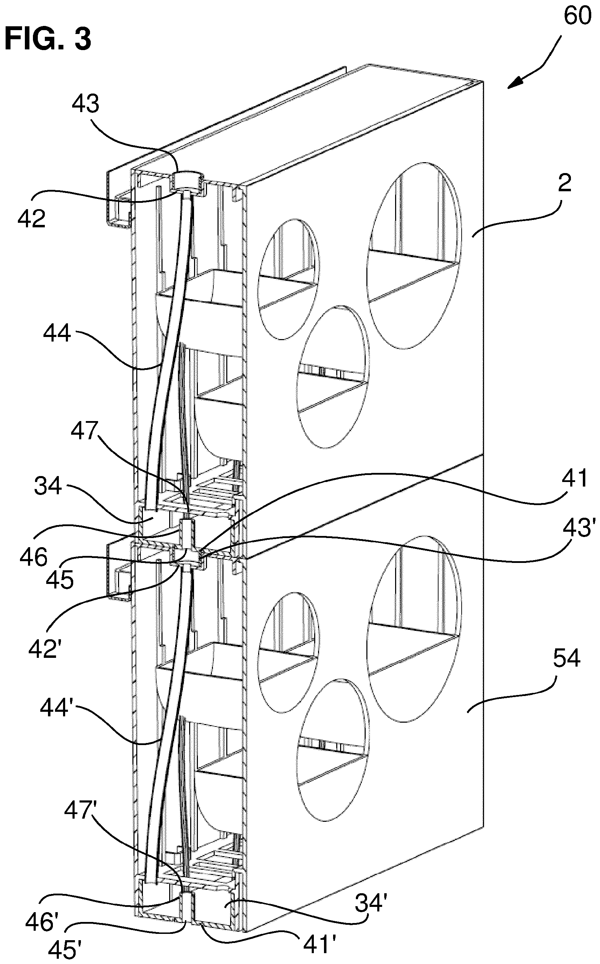

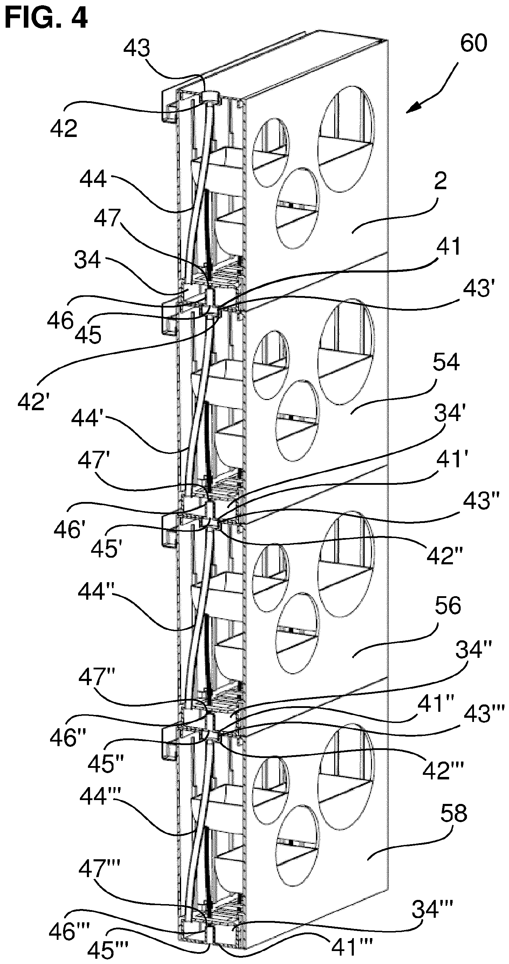

Zudem erlaubt es der modulare Aufbau des Pflanzmoduls 2, mehrere Pflanzmodule 2, 54 übereinander anzuordnen. Eine derartige Konfiguration von zwei übereinander angeordneten Pflanzmodulen 2, 54 ist in Fig. 3 als Teilschnittdarstellung gezeigt. Fig. 4 zeigt vier in analoger Weise übereinander angeordnete Pflanzmodule 2, 54, 56, 58.

Die Bezugszeichen der Einzelteile entsprechen denen der Fig. 1 und 2 und sind nicht alle erneut explizit dargestellt. Zur erleichterten Bezugnahme werden die ringförmige Ausnehmung 41, der Einlauf 42, der Zentrierring 43, die Zulaufleitung 44, der Überlauf 46 mit Einlass 47 und Auslass 45 und der Versorgungskasten 34 im zweiten Pflanzmodul 54 als ringförmige Ausnehmung 41', Einlauf 42`, Zentrierring 43`, Zulaufleitung 44`, Überlauf 46`, Einlass 47`, Auslass 45' und Versorgungskasten 34' bezeichnet. Im dritten Pflanzmodul 56 sind sie als ringförmige Ausnehmung 41", Einlauf 42", Zentrierring 43", Zulaufleitung 44", Überlauf 46", Einlass 47", Auslass 45" und Versorgungskasten 34" bezeichnet, und im vierten Pflanzmodul 58 als ringförmige Ausnehmung 41‴, Einlauf 42‴, Zentrierring 43‴, Zulaufleitung 44‴, Überlauf 46‴, Einlass 47‴, Auslass 45‴ und Versorgungskasten 34‴.

In den Fig. 3 und 4 werden mehrere Pflanzmodule 2, 54, 56, 58 einfach kombiniert, um eine größere Pflanzwand 60 zu schaffen. Dies ist bei unverändertem und identischem Rahmengehäuse 48 möglich.

Um die Stapelbarkeit und eine Versorgung aller Versorgungskästen 34, 34', 34", 34‴ mehrerer Pflanzmodule 2, 54, 56, 58 zu gewährleisten, ist es wesentlich, dass der Auslass 45 des oberen Pflanzmoduls 2 und Einlauf 42` des unteren Pflanzmoduls 54 so angeordnet sind, dass bei übereinander angeordneten Pflanzmodulen 2, 54 das aus dem Auslass 45 des Überlaufs 46 des oberen Pflanzmoduls 2 auslaufende Gießwasser in den Einlauf 42` des darunter gelegenen Pflanzmoduls 54 einläuft. Dies wird durch die ringförmige Ausnehmung 41 des oberen Pflanzmoduls 2 sichergestellt, in die der Zentrierring 43' des darunter gelegenen Pflanzmoduls 54 eingreift. Die Verwendung eines Zentrierrings ist beispielhaft - die Ausrichtung kann auch mit anderen Ausrichtstrukturen gleichermaßen erreicht werden.

Wie es in den Fig. 3 und 4 gut zu erkennen ist, ist jeweils der Einlass 47', 47", 47‴ eines Containers 4 an den Auslass 45, 45', 45" des darüber liegenden Containers 4 angeschlossen, so dass die Versorgungskästen 34, 34', 34", 34‴ der Container 4 in Art einer Kaskade befüllbar sind. Die hierfür nötige Ausrichtung erfolgt mittels der ringförmigen Ausnehmungen 41, 41', 41" und der korrespondierenden Zentrierringe 43', 43", 43‴. Die Ausrichtung der Container 4 kann aber auch durch andere Ausrichtstrukturen an der Oberseite und/oder der Unterseite des Containers 4 sichergestellt werden. Sie ist einfach möglich, da die Pflanzmodule 2, 54, 56, 58 hinsichtlich der Position des Auslasses 45, 45', 45", 45‴ am Boden 37 und des Einlaufs 42, 42', 42", 42‴ an der Oberseite alle identisch sind.

Wie ebenfalls in den Fig. 3 und 4 erkennbar, ist dabei der Querschnitt des Auslasses 45, 45', 45" kleiner als der von Einlauf 42', 42", 42‴ und Zulaufleitung 44', 44", 44‴, sodass das auslaufende Gießwasser vollständig in den Einlauf 42', 42", 42‴ des jeweils nächsten, unteren Pflanzmoduls 54, 56, 58 einlaufen kann, ohne dass es zu einem Rückstau kommt.

Die Kaskadenbewässerung läuft wie folgt ab: Der Versorgungskasten 34 des obersten Pflanzmoduls 2 füllt sich bis zum durch den Einlass 47 des Überlaufs 46 vorbestimmten maximalen Füllniveau - wird das maximale Füllniveau durch den Gießwasserspiegel überschritten, läuft das Gießwasser über den Auslass 45 des Überlaufs 46 in den Einlauf 42` des darunter gelegenen Pflanzmoduls 54, bis in dessen Versorgungskasten 34' das maximale Füllniveau erreicht ist und so weiter. Überschreitet das Gießwasser im Versorgungskasten 34‴ des untersten Pflanzmoduls 58 das maximale Füllniveau, läuft das Gießwasser direkt aus der Pflanzwand 60 heraus, so dass der Benutzer feststellt, dass alle Versorgungskästen 34, 34', 34", 34‴ vollständig mit Gießwasser gefüllt sind. Dadurch wird eine besonders einfache Kaskadenbewässerung erreicht und gleichzeitig dem Benutzer angezeigt, wenn alle Versorgungskästen 34, 34', 34", 34‴ der Pflanzwand 60 vollständig mit Gießwasser gefüllt sind.

Es kann auch an jedem mindestens aber am untersten Versorgungskasten 34‴ ein Füllstandsanzeiger angebracht sein, der dem Benutzer anzeigt, welches Füllniveau im Versorgungskasten 34‴ erreicht ist. Auch kann z.B. der unterste Versorgungskasten 34‴ in einer Pflanzwand 60 einen Auffangbehälter oder einen Verschlussstopfen für den Auslass 45‴ aufweisen, damit sichergestellt wird, dass kein Gießwasser aus der Pflanzwand 60 austritt. Dem Nutzer kann das Füllniveau der Versorgungskästen 34, 34', 34", 34‴ dann dennoch über Füllstandsanzeiger angezeigt werden.

Darüber hinaus ist es auch möglich, einzelne Rahmengehäuse 48 ohne Frontplatte 8 zu belassen, beispielsweise um einen Dekorationskasten zu schaffen, der sich zwischen mehreren bepflanzten Pflanzmodulen mit Frontplatte 8 befindet. Die Frontplatte 8 wird an der Vorderseite des Containers 4 lösbar angebracht. Dann werden die Schubladen 14, 19, 20 bepflanzt und eingesetzt.

Der modulare Aufbau der Pflanzmodule 2 hat weiter den Vorteil, dass verschiedenste Fronten 8 kombiniert werden können, insbesondere mit unterschiedlichen Formen, Anordnungen und Größen von Öffnungen 10, 15, 16.

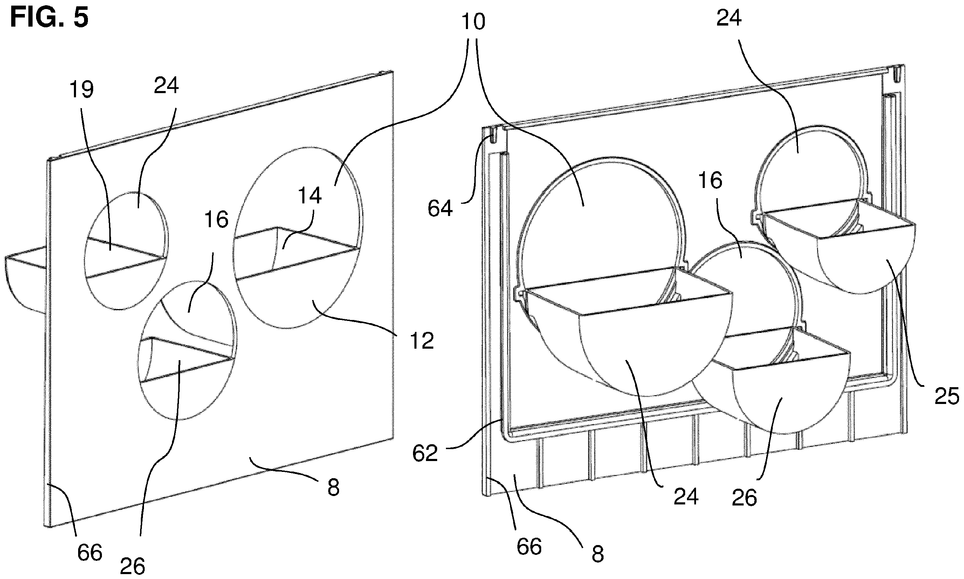

Fig. 5 zeigt in einer perspektivischen Ansicht von vorne sowie von hinten die Frontplatte 8 mit eingesetzten Schubladen 14, 19, 20. Zusätzlich ist zu erkennen, dass die Frontplatte 8 an ihrer Innenseite eine U-förmig umlaufende Hakenleiste 62 aufweist, die zum Einhaken der Frontplatte 8 an der Öffnung des Rahmengehäuses 48 des Containers 4 ausgebildet ist. Die Frontplatte 8 weist dazu an ihrer Rückseite (in Fig. 5 rechts dargestellt) die Hakenleiste 62 oder eine entsprechende Haltenut auf, mit der die Frontplatte 8 von oben in die U-förmige Öffnung des Rahmengehäuses 48 eingeschoben wird, bis eine Rastnase 64 in eine entsprechende Ausnehmung 66 am Rahmengehäuse 48 eingreift.

Bevorzugt hat das Rahmengehäuse 48 eine keilförmige Grundform. Das Rahmengehäuse 48 ist an einem Ende (hier unten) um ein bestimmtes Maß weniger tief (Dimension senkrecht zur Wand, an der das Pflanzmodul 2 aufgehängt wird) als am anderen Ende (hier oben). Dies erleichtert die Herstellung per Spritzguss, da das Entformen einfacher ist. Um dem Pflanzmodul 2 dennoch eine quaderförmige Geometrie zu verleihen, steht die Außenseite der Frontplatte 8 an dem (z. B. unteren) Ende, an dem das Rahmengehäuse 48 weniger tief ist, um das bestimmte Maß weiter vom Rahmengehäuse 48 vor, als an dem (z. B. oberen) Ende, an dem das Rahmengehäuse 48 die größere Tiefe hat. Die Innenseite der Frontplatte 8 liegt oben am Rahmengehäuse 48 an und ist unten durch Abstandshalter 66 in einem Abstand gehalten, der dem Maß entspricht, um das sich das Rahmengehäuse 48 nach unten verjüngt.

Die Abstandshalter 66 sind bevorzugt an der Frontplatte 8 angebracht. Sie erstrecken sich bevorzugt entlang der Verjüngungsrichtung und sind ihrerseits die Verjüngung ausgleichend keilförmig, da dies ebenfalls das Entformen beim Spritzguss erleichtert. Sie können dann zudem auch den keilförmigen Spalt, der am Rand des Rahmengehäuses 48 zur Frontplatte 8 entstehen würde, schließen. Die Abstandshalter 66 können jedoch auch als separate Teile vorgesehen werden oder am Rahmengehäuse ausgebildet werden.

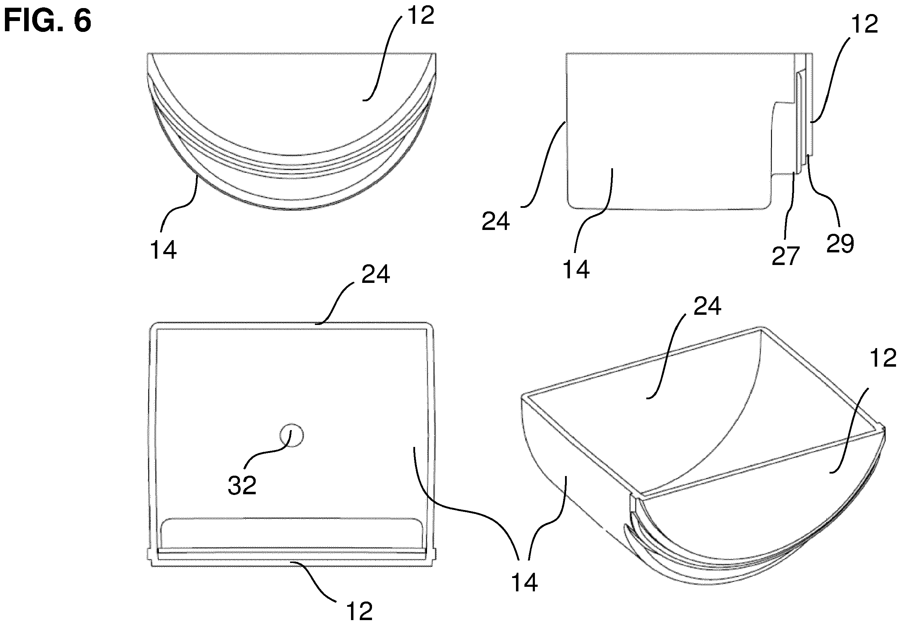

Fig. 6 zeigt exemplarisch die Schublade 14 in einer Ansicht von vorne, von links, perspektivisch bzw. von oben (im Uhrzeigersinn aufgeführt).

## Patentansprüche

1. Pflanzmodul für einen hängenden Garten, das aufweist:
- einen Container (4) mit mindestens einem Pflanzbehälter (14, 19, 20), der zur Aufnahme von Pflanzbodenmaterial ausgebildet und in den Container (4) einsetzbar ist, und
- einen im oder am Container (4) angeordneten Versorgungskasten (34) zur Versorgung des Pflanzbehälters (14, 19, 20) mit Gießwasser, welcher tiefer liegt als der Pflanzbehälter (14, 19, 20) und mit diesem fluidverbunden ist,
**dadurch gekennzeichnet, dass**
- der Versorgungskasten (34) einen Boden (37) und einen Überlauf (46) aufweist, welcher einen oberhalb des Bodens (37) liegenden Einlass (47), welcher ein maximales Füllniveau im Versorgungskastens (34) vorgibt, und einen Auslass (45) hat,
- das Pflanzmodul (2, 54, 56, 58) einen Deckel (40) aufweist, welcher am oberen Ende des Containers (4) angeordnet ist und einen Einlauf (42) für das Gießwasser hat,
- eine an den Einlauf (42) angeschlossene, insbesondere als Schlauch oder Rohr ausgebildete, Zulaufleitung (44) durch den Container (4) führt und im Versorgungskasten (34) mündet, und
- der Einlauf (42) und der Auslass (45) zueinander so angeordnet sind, dass bei übereinander gestapelten Pflanzmodulen (2, 54, 56, 58) aus dem Auslass (45) des oberen Pflanzmoduls auslaufendes Gießwasser in den Einlauf (42) des darunter gelegenen Pflanzmoduls (2, 54, 56, 58) einläuft.

2. Pflanzmodul nach Anspruch 1, **dadurch gekennzeichnet, dass** der Container (4) an seiner Oberseite und/oder seiner Unterseite mindestens eine Ausrichtstruktur (41, 43) aufweist, die beim Stapeln zweier Container (4) deren gegenseitige Lage so sicherstellen, dass der Auslass (45) des oberen Containers (4) über dem Einlauf (42') des unteren Containers (4') liegt, insbesondere **dadurch gekennzeichnet, dass** die Ausrichtstruktur (41) als vorstehendes Element an der Unterseite des Containers (4) vorgesehen ist und derart ausgebildet ist, dass sie bei zwei übereinander gestapelten Containern (4, 4') in den Einlauf (42') des untenliegenden Containers (4') eingreift, insbesondere **dadurch gekennzeichnet, dass** als erste Ausrichtstruktur ein Zentrierring (43') im Einlauf (42') vorgesehen ist, welcher so ausgebildet ist, dass er bei zwei übereinander gestapelten Containern (4, 4') in eine als Ausnehmung (41) ausgebildete zweite Ausrichtstruktur (41) des obenliegenden Containers (4) eingreift.

3. Pflanzmodul nach einem der obigen Ansprüche, **dadurch gekennzeichnet, dass** der Querschnitt des Auslasses (45), durch den das Gießwasser aus dem Versorgungskasten (34) abläuft, kleiner ist, als der Querschnitt des Einlaufs (42) und der Zulaufleitung (44).

4. Pflanzmodul nach einem der obigen Ansprüche, **dadurch gekennzeichnet, dass** der Versorgungskasten (34) mittels einer Struktur, welche eine Kapillarwirkung nutzt, mit dem Pflanzbehälter (14, 19, 20) fluidverbunden ist, insbesondere **dadurch gekennzeichnet, dass** die Struktur, welche eine Kapillarwirkung nutzt ein gießwasserleitender Docht (33, 36, 38) ist.

5. Pflanzmodul nach einem der obigen Ansprüche, **dadurch gekennzeichnet, dass** im Pflanzbehälter (14, 19, 20) ein Loch vorgesehen ist, durch das die Fluidverbindung in das Innere des Pflanzbehälters eindringen kann.

6. Pflanzmodul nach einem der obigen Ansprüche, **dadurch gekennzeichnet, dass** der Versorgungskasten an seiner Oberseite eine Öffnung aufweist, über die die Fluidverbindung zwischen Pflanzbehälter (14, 19, 20) und Versorgungskasten (34) hergestellt wird.

7. Pflanzmodul nach einem der obigen Ansprüche, **dadurch gekennzeichnet, dass** der Überlauf (46) als Tauchrohr ausgebildet ist und/oder der Einlass (47) des Überlaufs (46) höhenverstellbar ist.

8. Pflanzmodul nach einem der obigen Ansprüche, **dadurch gekennzeichnet, dass** die Pflanzbehälter (14, 19, 20) als Schubladen ausgebildet und in einem Schubladensystem lösbar im Container (4) befestigt sind.

9. Pflanzmodul nach Anspruch 8, **dadurch gekennzeichnet, dass** jeder als Schublade ausgebildeter Pflanzbehälter (14, 19, 20) über eine Fluidverbindung in direktem Kontakt mit dem Versorgungskasten (34) steht.

10. Pflanzmodul nach einem der obigen Ansprüche, **dadurch gekennzeichnet, dass** die Fluidverbindung beim Einsetzen des Pflanzbehälters (14, 19, 20) hergestellt wird.

11. Pflanzmodul nach einem der obigen Ansprüche, **dadurch gekennzeichnet, dass** der Versorgungskasten (34) unterhalb des Auslasses (45) einen Auffangbehälter aufweist.

12. Pflanzmodul nach einem der obigen Ansprüche, **dadurch gekennzeichnet, dass** der Versorgungskasten (34) einen Füllstandsanzeiger aufweist, welcher das Füllniveau des Versorgungskastens (34) anzeigt.

13. Pflanzmodul nach einem der obigen Ansprüche, **dadurch gekennzeichnet, dass** der Pflanzbehälter (14, 19, 20) eine Wandung aus einem wasserundurchlässigen Material, insbesondere aus Kunststoff, aufweist.

14. Pflanzwand für einen hängenden Garten, mit mindestens zwei übereinander angeordneten Pflanzmodulen (2, 54, 56, 58) nach einem der Ansprüche 1 bis 13.

15. Pflanzwand nach Anspruch 14, **dadurch gekennzeichnet, dass** der Versorgungkasten (34‴) des untersten Pflanzmoduls (2, 54, 56, 58) einen Füllstandsanzeiger sowie einen Auffangbehälter oder einen Verschlusstopfen für den Auslass (45‴) aufweist.
